# FASCICULE DE BREVET EUROPEEN

(11) **EP 3 905 931 B1**
(45) Date de publication et mention de la délivrance du brevet: **25.01.2023**
(21) Numéro de dépôt: 19832161.4
(22) Date de dépôt: 30.12.2019
(51) Int. Cl.: A47J 36/32, A47J 37/06

(54) **APPAREIL DE CUISSON ELECTRIQUE AVEC UNE FONCTION DE MARQUAGE DE L'ALIMENT A CUIRE**
ELEKTRISCHES KOCHGERÄT MIT EINER FUNKTION ZUR MARKIERUNG EINES GARGUTS
ELECTRIC COOKING APPLIANCE WITH A FUNCTION FOR MARKING THE FOOD TO BE COOKED

(30) Priorité: 01.01.2019 FR 1900001
(43) Date de publication de la demande: 10.11.2021
(73) Titulaire: SEB S.A., 69130 Ecully (FR)
(72) Inventeur: VOLATIER, Sébastien, 21000 DIJON (FR)
(74) Mandataire: SEB Développement
(86) Numéro de dépôt international: PCT/EP2019/087178
(87) Numéro de publication internationale: WO 2020/141167

(56) Documents cités:
- WO-A1-2013/107964
- WO-A1-2013/107965
- US-A1- 2015 312 964
- US-A1- 2016 220 059

## Description

La présente invention se rapporte au domaine technique général des appareils de cuisson électrique.

Plus particulièrement, la présente invention se rapporte à un appareil de cuisson électrique ainsi qu'à des procédés de marquage d'un aliment à partir d'un tel appareil de cuisson.

Parmi ces appareils de cuisson électrique, on connaît notamment les grils double face qui comprennent des plaques de cuisson inférieure et supérieure entre lesquelles sont positionnés un ou plusieurs aliments devant cuire à leurs contacts. Les aliments peuvent être de la viande, du poisson, des légumes ou autre.

La cuisson de ces aliments résulte de l'échange de calories entre les plaques et l'aliment.

L'électronique de régulation permet d'optimiser cet échange, en l'adaptant à l'aliment pour un meilleur résultat organoleptique.

Une telle adaptation à l'aliment est décrite dans les documents WO2013107964 et WO2013107965 au nom de la demanderesse qui décrivent un appareil de cuisson électrique du type grill comprenant une base de données comprenant des paramètres pour définir une pluralité de programmes de cuisson adaptés à cuire un aliment sélectionné par l'utilisateur tout en visualisant son état de cuisson au cours de la phase de cuisson.

Ainsi, un programme de cuisson se définit par une combinaison :
- de valeurs constantes prédéterminées, notamment les différentes températures de cuisson interne de l'aliment correspondant chacune à un état de cuisson à coeur d'un aliment déterminé, et les différentes températures de consignes à appliquer au cours des différentes phases du programme de cuisson,
- de valeurs de variables mesurées par l'appareil de cuisson électrique, notamment l'épaisseur de l'aliment mesurée par les moyens de mesures d'épaisseur, et/ou de la surface d'occupation de l'aliment estimée par des moyens de traitement à partir des températures mesurées par l'élément de mesure de la température de la plaque de cuisson supérieure,
- de différents paramètres d'entrée déclarés par l'utilisateur, notamment un type d'aliment à cuire ou menu parmi une liste de types d'aliments prédéfinis. A partir de ces paramètres, les moyens de traitement de l'appareil de cuisson électrique appliquent les températures de consignes de la plaque de cuisson inférieure et de la plaque de cuisson supérieure à appliquer au cours de la phase de préchauffage et au cours de la phase de cuisson d'un aliment déterminé.

De plus, les moyens de traitement de l'appareil de cuisson électrique déterminent une durée de cuisson de l'aliment déterminé.

L'échange de calories entre les plaques et l'aliment est réalisé en deux étapes :
- une première étape à température élevée, après la phase de préchauffage des plaques de cuisson et au début de cuisson, pour dessécher rapidement la surface de l'aliment, et
- une deuxième étape, beaucoup plus longue, à plus basse température pour laisser le temps aux calories de migrer vers le coeur de l'aliment. La température progresse ainsi lentement vers le centre de l'aliment sans risque de surcuisson en surface.

La première étape va assurer une accumulation de chaleur à la périphérie de l'aliment, ce qui va résulter à son marquage ; une croûte va ainsi se former.

La température de préchauffage de l'appareil de cuisson électrique va donc influer, pour un aliment donné, sur le niveau de marquage souhaité.

Une bonne gestion de la puissance dans la deuxième étape, consistant à adapter le taux de cyclage de l'alimentation électrique des éléments chauffants électriques, permet en théorie de cuire de façon identique des aliments de différentes épaisseurs, avec un même niveau de marquage et un même niveau de cuisson à coeur.

Si d'un point de vue organoleptique, ce procédé est satisfaisant, il présente néanmoins deux inconvénients pour certains consommateurs, en particulier pour certains types d'aliments, en particulier les viandes pour lesquelles le niveau de marquage, autrement dénommé dorage, est quelque fois jugé insuffisant par les adeptes des viandes très marquées, notamment pour certaines viandes comme le boeuf qui nécessitent de fortes températures.

Une fonction spécifique de marquage de l'aliment permet de remédier en partie à cet inconvénient.

C'est ainsi qu'il est connu par exemple du document US2016220059 des appareils de cuisson proposant une fonction de marquage de l'aliment pour dorer les aliments et ainsi améliorer l'apparence esthétique de l'aliment auprès de certains utilisateurs.

Le marquage reprend généralement le motif des plaques de cuisson.

Cette fonction est mise en oeuvre en augmentant fortement la température des plaques de cuisson.

Cependant, cette fonction est réalisée à divers moments précis de la phase de cuisson, notamment au début et à la fin de la phase de cuisson de l'aliment, ce qui rend la maîtrise de l'état de cuisson interne de l'aliment difficilement contrôlable.

Il est donc nécessaire de trouver un compromis entre une augmentation de la température des plaques de cuisson pendant la phase de cuisson de manière à marquer davantage l'aliment, et une température des plaques de cuisson évitant une surcuisson en surface.

Une solution consisterait à augmenter lorsque possible les températures de consignes de préchauffage et de programmes de cuisson lors de la sélection par l'utilisateur de la fonction de marquage de l'aliment.

Néanmoins, l'augmentation en température des plaques est limitée par la résistance des matériaux aux températures élevées, notamment celle du revêtement en PTFE des plaques dont la résistance en température n'excède pas 270°C, et par les normes de sécurité qui imposent des valeurs limites de températures sur certaines parties de l'appareil de cuisson électrique, en particulier les capots.

De plus, pour certains programmes de cuisson de certains aliments, notamment le boeuf, la température de préchauffage est déjà au maximum et la température de consigne au cours de la cuisson est sensiblement identique à la température de consigne de préchauffage.

Il est donc nécessaire de trouver une solution qui permette de réaliser un marquage des aliments adapté à l'ensemble des programmes de cuisson de tous les aliments proposés par l'appareil de cuisson, satisfaisant sur le niveau de marquage tout en préservant l'intégrité des matériaux utilisés et en respectant les normes de sécurité qui s'imposent à l'appareil de cuisson électrique.

Aussi, la présente invention a pour but de résoudre tout ou partie des inconvénients mentionnés ci-dessus.

A cet effet, la présente invention se rapporte à un appareil de cuisson électrique comprenant :
- une alimentation électrique,
- une partie inférieure comportant :
   - une plaque de cuisson inférieure apte à recevoir l'aliment,
   - un élément chauffant électrique inférieur apte à chauffer la plaque de cuisson inférieure,
   - un élément de mesure de température de la plaque de cuisson inférieure,
   - une partie supérieure comportant :
      - une plaque de cuisson supérieure apte à être déplacée relativement à la plaque de cuisson inférieure de manière à venir au contact de l'aliment disposé sur la plaque de cuisson inférieure,
      - un élément chauffant électrique supérieur apte à chauffer la plaque de cuisson supérieure,
      - un élément de mesure de température de la plaque de cuisson supérieure,
      - au moins un commutateur électrique apte à autoriser ou à interrompre l'alimentation électrique de l'élément chauffant électrique inférieur et/ou de l'élément chauffant électrique supérieur,
      - une base de données comprenant une loi de cuisson ou une table de calcul ainsi que des paramètres prédéterminés pour définir une pluralité de programmes de cuisson comprenant une phase de préchauffage avec une température de consigne, et une phase de cuisson avec au moins une température de consigne et au moins une durée de cuisson,
      - une interface utilisateur agencée pour permettre à l'utilisateur de sélectionner des paramètres de la base de données pour définir un programme de cuisson particulier parmi la pluralité de programmes de cuisson pouvant être définis, pour sélectionner au moins deux de ces paramètres ladite interface utilisateur comprenant en outre un moyen de sélection d'un type d'aliment parmi une pluralité de types d'aliment prédéfinis et un bouton d'activation d'une fonction de marquage des surfaces de l'aliment disposé au contact de la plaque de cuisson inférieure et de la plaque de cuisson supérieure, les programmes de cuisson définis avec un paramètre d'activation de la fonction de marquage ayant une température de consigne de la phase de préchauffage supérieure à la température de consigne de la phase de cuisson des programmes de cuisson définis sans paramètre d'activation de la fonction de marquage pour un même type d'aliment,
      - des moyens de traitement aptes à exécuter un programme de cuisson ainsi défini par un utilisateur, l'exécution d'un programme de cuisson consistant à réaliser des séquences de régulation en température sur une température de consigne prédéterminée pendant une durée déterminée, lesdites séquences de régulation étant réalisées par des séquences de commutations de l'au moins un commutateur électrique entre des états de commutation fermés pendant des temps d'activation et des états de commutation ouverts pendant des temps de repos,
      les moyens de traitement de l'appareil de cuisson étant agencés de manière que lorsque l'utilisateur a défini au moins un programme de cuisson déterminé avec le paramètre d'activation de la fonction de marquage alors :
      - l'élément de mesure de température de la plaque de cuisson supérieure est utilisé pour réguler la température d'au moins la plaque de cuisson supérieure à la température de consigne de préchauffage pendant cette phase de préchauffage du programme de cuisson ainsi défini par l'utilisateur, et
      - l'élément de mesure de température de la plaque de cuisson inférieure est utilisé pour réguler la température de la plaque de cuisson inférieure et de la plaque de cuisson supérieure à au moins une température de consigne de cuisson pendant la phase de cuisson du programme de cuisson ainsi défini par l'utilisateur.

Cette disposition permet d'assurer la fonction de marquage de l'aliment en début de cuisson, grâce l'énergie calorifique accumulée dans les plaques pendant la phase de préchauffage, mais également pendant la phase de cuisson grâce à l'énergie apportée par les éléments chauffants lors des temps d'activation de l'au moins un commutateur électrique.

Pendant la phase de préchauffage, l'aliment n'est pas encore disposé entre les plaques de cuisson, la charge est donc identique entre les deux plaques de cuisson. Dès lors, il importe peu que la mesure de température soit réalisée par l'élément de mesure de température de la plaque de cuisson inférieure ou supérieure.

Néanmoins, le fait d'actionner la fonction de marquage des aliments permet d'augmenter entre autres la température de consigne et donc la température des plaques de cuisson au cours de la phase de préchauffage, ce qui augmente le marquage des aliments lors de l'introduction de l'aliment entre les plaques.

Cependant, pendant la phase de cuisson la régulation en température de la plaque de cuisson inférieure mais également de la plaque de cuisson supérieure est réalisée à partir des mesures de l'élément de mesure de température de la plaque de cuisson inférieure.

En effet, l'élément de mesure de température de la plaque de cuisson inférieure mesure une température plus basse que celle mesurée par l'élément de mesure de température de la plaque de cuisson supérieure du fait de l'écoulement des jus.

La commutation de l'au moins un commutateur électrique vers une position visant à interrompre l'alimentation électrique de l'élément chauffant électrique inférieur et/ou de l'élément chauffant électrique supérieur est ainsi retardée, ce qui permet d'obtenir un marquage plus important qu'avec un programme de cuisson déterminé sans l'activation de la fonction de marquage pour une température de consigne équivalente.

La deuxième étape à plus basse température est ainsi supprimée et on augmente les calories transférées à l'aliment au cours de la phase de cuisson.

Aussi, par rapport à un précédent modèle d'appareil de cuisson électrique ne proposant pas une telle activation d'une fonction de marquage, on accepte sur un appareil de cuisson électrique selon l'invention de diminuer le niveau de marquage d'un programme de cuisson déterminé sans l'activation de la fonction de marquage en baissant les températures de consigne de préchauffage afin d'obtenir une différence de marquage significative avec un programme de cuisson déterminé avec l'activation de la fonction de marquage et dont les températures de consignes de préchauffage sont plafonnées et sensiblement équivalentes à celles du modèle précédent pour des mêmes types d'aliment.

Au final, la perception du marquage de l'aliment par l'utilisateur est accentuée par la différence de marquage due à l'activation de la fonction de marquage sur l'appareil de cuisson.

Selon un aspect de l'invention, l'élément de mesure de température de la plaque de cuisson inférieure est disposé pour réaliser une mesure sensiblement au centre de la plaque de cuisson inférieure.

Cette disposition permet d'augmenter les probabilités qu'un aliment soit disposé sur la plaque de cuisson inférieure par-dessus l'élément de mesure de la température de manière que l'aliment absorbe davantage de calories à proximité de l'élément de mesure et donc que la baisse de température mesurée par l'élément de mesure soit plus importante que celle qui aurait été mesurée en l'absence d'un aliment à proximité de l'élément de mesure.

Ainsi, lorsque la fonction de marquage aura été activée sur l'interface utilisateur alors la température de consigne sera encore plus difficile à atteindre, ce qui aura pour conséquences de diminuer encore le nombre de séquences de régulation pendant la phase de cuisson.

Selon un aspect de l'invention, les moyens de traitement de l'appareil de cuisson sont agencés de manière que lorsque l'utilisateur a défini un programme de cuisson sans le paramètre d'activation de la fonction de marquage sur l'interface utilisateur alors :
- l'élément de mesure de température de la plaque de cuisson inférieure ou supérieure est utilisé pour réguler la température à la température de consigne de préchauffage pendant la phase de préchauffage du programme de cuisson ainsi défini par l'utilisateur, et
- l'élément de mesure de température de la plaque de cuisson supérieure est également utilisé pour réguler la température à l'au moins une température de consigne de cuisson pendant la phase de cuisson du programme de cuisson ainsi défini par l'utilisateur.

Cette disposition permet de limiter l'échauffement de l'appareil de cuisson électrique lors de la phase de préchauffage mais également pendant la phase de cuisson. En effet, l'utilisateur perçoit la température de la partie supérieure de l'appareil de cuisson et non la température de la partie inférieure de l'appareil de cuisson. Une mesure de température par l'élément de mesure de température de la plaque de cuisson supérieure permet donc de prévenir un échauffement de l'appareil.

Selon un aspect de l'invention, les moyens de traitement sont adaptés pour que le nombre de séquences de régulation et le temps d'activation de l'au moins un commutateur électrique dépendent de l'épaisseur mesurée par un dispositif de mesure de l'écartement entre la plaque de cuisson supérieure et la plaque de cuisson inférieure.

Selon un aspect de l'invention, lorsque la fonction de marquage a été activée sur l'interface utilisateur alors le nombre de séquences de régulation diminue pendant la phase de cuisson et l'au moins un commutateur électrique présente au moins un état de commutation fermé avec un temps d'activation supérieur aux temps d'activation de chacun des états de commutation fermés de l'au moins un commutateur électrique lorsque la fonction de marquage n'est pas activée.

En effet, lors de l'activation de la fonction de marquage, la régulation en température se base sur les informations de l'élément de mesure de température de la plaque de cuisson inférieure pour faire en sorte que les éléments chauffants commutent beaucoup plus longtemps car la plaque de cuisson inférieure est toujours plus froide que la plaque de cuisson supérieure du fait de l'écoulement des jus.

Selon un aspect de l'invention, les moyens de traitement sont adaptés pour que le nombre de séquences de régulation et le temps d'activation de l'au moins un commutateur électrique dépendent d'un paramètre lié à l'épaisseur mesurée par un dispositif de mesure de l'écartement entre la plaque de cuisson supérieure et la plaque de cuisson inférieure.

Cette disposition permet d'adapter le niveau de marquage à l'épaisseur de l'aliment disposé entre les plaques de cuisson. Ainsi, il serait par exemple possible d'obtenir un niveau de marquage plus élevé pour un type d'aliment plus épais qu'avec un même type d'aliment moins épais, ce qui renforcerait encore davantage l'impression de marquage de l'aliment pour l'utilisateur.

Selon un aspect de l'invention, l'élément de mesure de température de la plaque de cuisson inférieure et l'élément de mesure de température de la plaque de cuisson supérieure sont du type capteur à coefficient de température négative.

Selon un aspect de l'invention, l'élément de mesure de température de la plaque de cuisson supérieure est utilisé pour réguler la température à la température de consigne de préchauffage pendant cette phase de préchauffage du programme de cuisson ainsi défini par l'utilisateur, mais également pour estimer un paramètre lié à la surface d'occupation de l'aliment sur la plaque de cuisson supérieure, cette estimation étant réalisée à partir de la détermination d'une durée au cours de laquelle il est constaté une baisse de température produite lors du contact de l'aliment avec la plaque de cuisson supérieure.

Cette disposition permet d'obtenir un point de départ de mesure de température plus stable et donc plus fiable de manière à obtenir une mesure plus précise de la durée de baisse de température produite lors du contact de l'aliment avec la plaque de cuisson supérieure. En effet, une mesure de température réalisée au cours de la phase de cuisson à partir de l'élément de mesure de température de la plaque de cuisson supérieure est moins perturbée qu'une mesure de température réalisée au cours de la phase de cuisson à partir de l'élément de mesure de température de la plaque de cuisson inférieure du fait de l'écoulement des jus.

Selon un aspect de l'invention, l'élément de mesure de température de la plaque de cuisson supérieure est excentré et agencé pour réaliser une mesure sur un bord de la plaque de cuisson supérieure.

Cette disposition permet de mesurer une durée moyenne de baisse de température provoquée par un ou plusieurs aliments répartis sur la surface de la plaque de cuisson supérieure, ce qui limite la durée de baisse de température pouvant être engendrée par la proximité d'un seul aliment avec l'élément de mesure de température de la plaque de cuisson supérieure. En effet, une telle mesure de durée de baisse de température ne serait pas représentative de la durée de baisse de température engendrée par l'ensemble des aliments au contact de la plaque de cuisson supérieure.

Selon un aspect de l'invention, l'appareil de cuisson électrique comprend un commutateur électrique inférieur apte à autoriser ou à interrompre l'alimentation électrique de l'élément chauffant électrique inférieur et un commutateur électrique supérieur apte à autoriser ou à interrompre l'alimentation électrique de l'élément chauffant électrique supérieur.

Cette disposition permet un contrôle indépendant de la chauffe sur la plaque de cuisson supérieure et sur la plaque de cuisson inférieure.

Il est ainsi possible d'envisager des séquences de commutation des commutateurs électriques différentes de manière à diminuer la dissymétrie de marquage entre la face supérieure de l'aliment et la face inférieure de l'aliment.

Selon un aspect de l'invention, au moins un programme de cuisson se définit avec :
- une température de consigne de la phase de préchauffage, et au moins une température de consigne et au moins une durée de cuisson de la phase de cuisson appliquées à l'élément chauffant électrique inférieur, et
- une température de consigne de la phase de préchauffage, et au moins une température de consigne et au moins une durée de cuisson de la phase de cuisson appliquées à l'élément chauffant électrique supérieur,
les moyens de traitement étant agencés pour piloter indépendamment le commutateur électrique inférieur et le commutateur électrique supérieur pendant la phase de préchauffage et/ou pendant la phase de cuisson.
Cette disposition permet d'équilibrer le chauffage sur le dessus de l'aliment et sur le dessous de l'aliment sur la base des informations de températures fournies par l'élément de mesure de la température de la plaque de cuisson inférieure tout en tenant compte de l'écoulement des jus qui vient davantage refroidir la plaque de cuisson inférieure lors du contact de l'aliment avec les plaques.

Selon un aspect de l'invention, pour un même programme de cuisson la température de consigne de la phase de préchauffage et l'au moins une température de consigne de la phase de cuisson appliquées à l'élément chauffant électrique inférieur diffèrent respectivement de la température de consigne de la phase de préchauffage et de l'au moins une température de consigne de la phase de cuisson appliquées à l'élément chauffant électrique supérieur.

Cette disposition permet de mieux maitriser le marquage de manière indépendante sur la face supérieure et sur la face inférieure de l'aliment.

Selon un aspect de l'invention, un programme de cuisson se définit avec tout ou partie des paramètres suivants :
- type d'aliment parmi une liste prédéfinie ;
- épaisseur de l'aliment mesurée par un dispositif de mesure d'écartement des plaques de cuisson inférieure et supérieure ;
- surface d'occupation de l'aliment sur la plaque de cuisson supérieure ;
- activation ou non d'une fonction de cuisson d'aliment congelé pendant la phase de préchauffage ;
- activation ou non d'une fonction de marquage de l'aliment pendant la phase de préchauffage.

Cette disposition permet à l'utilisateur de définir une multitude de programmes de cuisson de manière à optimiser au maximum le rendu de cuisson de l'aliment et ainsi satisfaire au maximum l'utilisateur.

Selon un aspect de l'invention, les moyens de traitement sont agencés pour déterminer des durées de cuisson au cours desquelles un type d'aliment prédéfini présente différents états de cuisson interne pour un programme de cuisson ainsi défini par l'utilisateur.

Cette disposition permet de déterminer les moments de transitions entre les différents états de cuisson d'un type d'aliment prédéfini et sélectionné par l'utilisateur.

Selon un aspect de l'invention, l'interface utilisateur comprend un moyen d'information de l'état de cuisson interne de l'aliment au fur et à mesure de l'avancement de la phase de cuisson et/ou du temps restant jusqu'à une transition vers un état de cuisson ultérieur.

Cette disposition permet d'informer l'utilisateur sur les moments de passage d'un état de cuisson de l'aliment vers un autre état de cuisson.

Cette disposition permet également d'informer l'utilisateur du temps restant jusqu'à l'atteinte d'un état de cuisson ultérieure.

L'utilisateur n'a donc plus qu'à retirer l'aliment lorsque celui-ci a atteint l'état de cuisson souhaité.

Une alerte peut être générée sur l'appareil de cuisson ou bien sur un dispositif personnel de l'utilisateur, par exemple un smartphone.

La présente invention se rapporte également à un procédé de marquage d'un aliment à partir d'un appareil de cuisson électrique tel que décrit précédemment, comprenant les étapes suivantes :
- sélectionner un type d'aliment sur l'interface utilisateur parmi une liste prédéfinie de types d'aliments ;
- démarrer une phase de préchauffage des plaques de cuisson inférieure ou supérieure ;
- réguler la température des plaques de cuisson à la température de préchauffage d'un programme de cuisson défini sans paramètre d'activation de la fonction de marquage à partir de l'information de température délivrée par l'élément de mesure de température de la plaque de cuisson inférieure ou supérieure ;
- pendant la phase de préchauffage, appuyer sur un bouton d'activation d'une fonction de marquage des surfaces de l'aliment disposé au contact de la plaque de cuisson inférieure et de la plaque de cuisson supérieure ;
- réguler la température des plaques de cuisson à la température de préchauffage d'un programme de cuisson défini avec un paramètre d'activation de la fonction de marquage à partir de l'information de température délivrée par l'élément de mesure de température de la plaque de cuisson inférieure ou supérieure ;
- une fois la température de préchauffage du programme de cuisson défini avec un paramètre d'activation de la fonction de marquage atteinte alors placer l'aliment entre les deux plaques de cuisson ;
- démarrer la phase de cuisson de l'aliment,
- réguler la température des plaques de cuisson à la température de cuisson du programme de cuisson défini avec un paramètre d'activation de la fonction de marquage à partir de l'information de température délivrée par l'élément de mesure de température de la plaque de cuisson inférieure.

Cette mise en oeuvre du procédé permet à l'utilisateur d'activer la fonction de marquage de l'aliment alors même que la phase de préchauffage d'un programme de cuisson défini sans paramètre d'activation de la fonction de marquage avait déjà été initiée.

La présente invention se rapporte également à un procédé de marquage d'un aliment à partir d'un appareil de cuisson électrique tel que décrit précédemment, comprenant les étapes suivantes :
- sélectionner un type d'aliment sur l'interface utilisateur parmi une liste prédéfinie de types d'aliments ;
- avant la phase de préchauffage, appuyer sur un bouton d'activation d'une fonction de marquage des surfaces de l'aliment disposé au contact de la plaque de cuisson inférieure et de la plaque de cuisson supérieure ;
- démarrer une phase de préchauffage des plaques de cuisson inférieure ou supérieure ;
- réguler la température des plaques de cuisson à la température de préchauffage d'un programme de cuisson défini avec un paramètre d'activation de la fonction de marquage à partir de l'information de température délivrée par l'élément de mesure de température de la plaque de cuisson inférieure ou supérieure ;
- une fois la température de préchauffage du programme de cuisson défini avec un paramètre d'activation de la fonction de marquage atteinte alors placer l'aliment entre les deux plaques de cuisson ;
- démarrer la phase de cuisson de l'aliment,
- réguler la température des plaques de cuisson à la température de cuisson du programme de cuisson défini avec un paramètre d'activation de la fonction de marquage à partir de l'information de température délivrée par l'élément de mesure de température de la plaque de cuisson inférieure.

Cette mise en oeuvre du procédé permet à l'utilisateur d'activer la fonction de marquage de l'aliment avant même que la phase de préchauffage n'ait été initiée.

D'autres avantages et caractéristiques de l'invention ressortiront mieux à la lecture de la description détaillée de l'invention faite à titre illustratif et non limitatif en référence aux figures qui illustrent tout ou partie d'un appareil de cuisson électrique et d'un procédé d'utilisation d'un tel appareil selon l'invention.
La figure 1 illustre une vue dans une position ouverte de l'appareil de cuisson électrique selon l'invention.
La figure 2 illustre une vue dans une position ouverte de l'appareil de cuisson électrique selon l'invention auquel ont été retirées les plaques de cuisson.
La figure 3 est une vue de face dans une position fermée de l'appareil de cuisson électrique selon l'invention.
La figure 4 est une vue agrandie sur une interface utilisateur de l'appareil de cuisson électrique selon l'invention.
La figure 5 est un graphique permettant de visualiser le fonctionnement de l'appareil de cuisson électrique selon l'invention pour un programme de cuisson de boeuf défini sans un paramètre d'activation de la fonction de marquage.
La figure 6 est un graphique permettant de visualiser le fonctionnement de l'appareil de cuisson électrique selon l'invention pour un programme de cuisson de boeuf défini avec un paramètre d'activation de la fonction de marquage.

Un appareil de cuisson électrique 1 comprend de manière usuelle une alimentation électrique (non illustrée) permettant de raccorder l'appareil de cuisson électrique 1 à un réseau électrique en vue de l'alimenter en énergie.

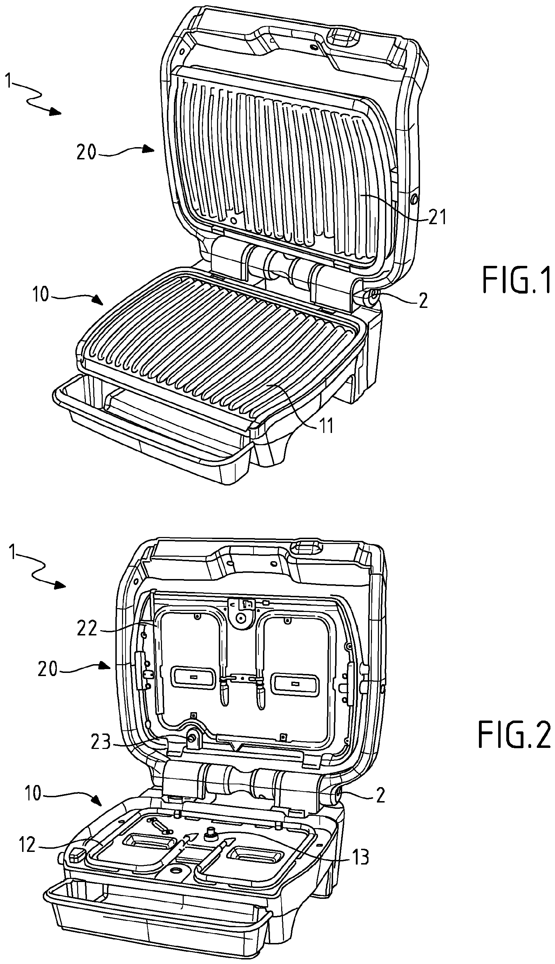

Comme illustré particulièrement aux figures 1 et 2, l'appareil de cuisson électrique 1 comprend en outre une partie inférieure 10 et une partie supérieure 20.

La partie inférieure 10 est reliée à la partie supérieure 20 par une articulation 2 du type charnière.

Comme illustrée particulièrement à la figure 1, la partie inférieure 10 comporte une plaque de cuisson inférieure 11 apte à recevoir l'aliment et à venir au contact de la face inférieure de l'aliment, et la partie supérieure 20 comporte une plaque de cuisson supérieure 21 apte à être déplacée relativement à la plaque de cuisson inférieure 11, notamment par le biais de l'articulation 2, de manière à venir au contact de la face supérieure de l'aliment disposé sur la plaque de cuisson inférieure 11.

L'articulation permet de déplacer la partie supérieure 20 relativement à la partie inférieure 10 pour définir :
- une position de contact de la plaque de cuisson inférieure 11 et de la plaque de cuisson supérieure 21 dans laquelle est notamment réalisée une phase de préchauffage de l'appareil de cuisson électrique 1,
- une position ouverte permettant de disposer les aliments sur la plaque de cuisson inférieure 11 ; et
- une position fermée dans laquelle les aliments sont enserrés entre la plaque de cuisson inférieure 11 et la plaque de cuisson supérieure 21.

Comme illustrée particulièrement à la figure 2, la partie inférieure 10 comporte également un élément chauffant électrique inférieur 12 apte à chauffer la plaque de cuisson inférieure 11, et un élément de mesure de température 13 de la plaque de cuisson inférieure 11.

Sur cette même figure 2, et de façon analogue, la partie supérieure 20 comporte également un élément chauffant électrique supérieur 22 apte à chauffer la plaque de cuisson supérieure 21, et un élément de mesure de température 23 de la plaque de cuisson supérieure 21.

Les éléments électriques chauffants 12, 22 sont par exemple des éléments résistifs chauffants, et les éléments de mesure de température 13, 23 sont par exemple du type capteur à coefficient de température négative.

L'élément de mesure de température 23 de la plaque de cuisson supérieure 21 est disposé de manière excentrée par rapport à la plaque de cuisson supérieure 21.

L'élément de mesure de température 13 de la plaque de cuisson inférieure 11 est quant à lui disposé de manière centrée par rapport à la plaque de cuisson inférieure 11.

Les fonctions de ces deux dispositions particulières sont décrites plus loin dans le texte.

Par ailleurs, mais de façon non illustrée, l'appareil de cuisson électrique 1 comprend au moins un commutateur électrique apte à autoriser ou à interrompre l'alimentation électrique de l'élément chauffant électrique inférieur 12 et/ou de l'élément chauffant électrique supérieur 22.

Typiquement, un tel commutateur électrique est par exemple un relais électrique de puissance.

Ainsi, l'appareil de cuisson électrique 1 peut comprendre un unique commutateur électrique apte à autoriser ou à interrompre simultanément l'alimentation électrique de l'élément chauffant électrique inférieur 12 et de l'élément chauffant électrique supérieur 22, ou bien un premier commutateur électrique inférieur apte à autoriser ou à interrompre l'alimentation électrique de l'élément chauffant électrique inférieur 12 et un deuxième commutateur électrique supérieur apte à autoriser ou à interrompre l'alimentation électrique de l'élément chauffant électrique supérieur 22.

Un appareil de cuisson électrique 1 comprenant deux commutateurs électriques permet de contrôler de manière indépendante le chauffage de la plaque de cuisson inférieure 11 et le chauffage de la plaque de cuisson supérieure 21.

L'appareil de cuisson électrique 1 comporte également une base de données (non illustrée) comprenant une loi de cuisson ou une table de calcul ainsi que des paramètres prédéterminés pour définir une pluralité de programmes de cuisson.

Cette loi de cuisson ou cette table de calcul ainsi que ces paramètres prédéterminés sont préenregistrés en usine.

Chaque programme de cuisson présente une phase de préchauffage PP et une phase de cuisson PC.

Une phase de préchauffage PP d'un programme de cuisson se définit par une température de consigne et peut perdurer jusqu'à ce que l'utilisateur introduise un aliment à cuire entre les plaques de cuisson ou bien qu'une fonction de sécurité interrompe le chauffage de l'appareil de cuisson électrique 1.

De même, une phase de cuisson PC d'un programme de cuisson se définit par au moins une température de consigne et au moins une durée de cuisson.

Ces programmes de cuisson sont exécutables par des moyens de traitement (non illustrés) de l'appareil de cuisson électrique 1.

De tels moyens de traitement comprennent par exemple un processeur ou un contrôleur ou bien encore un microprocesseur.

La diversité des températures et des durées de cuisson d'un programme de cuisson pendant la phase de cuisson PC s'explique par la possibilité qu'ont les moyens de traitement à déterminer des durées de cuisson au cours desquelles l'aliment présente différents états de cuisson interne pour un programme de cuisson défini par l'utilisateur.

Enfin, l'appareil de cuisson électrique 1 comporte une interface utilisateur 30 agencée pour permettre à l'utilisateur de sélectionner des paramètres de la base de données pour définir un programme de cuisson particulier parmi la pluralité de programmes de cuisson pouvant être définis.

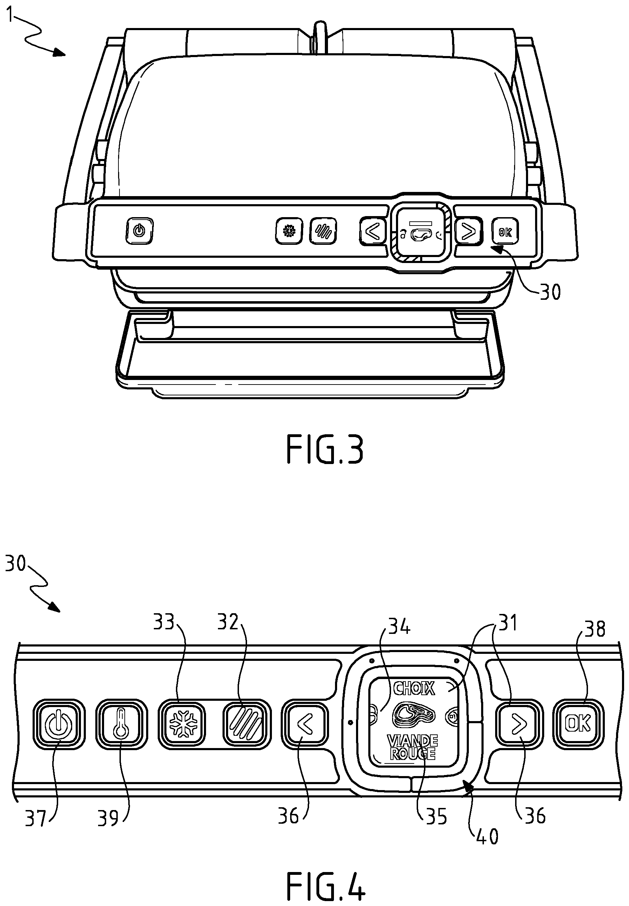

A cette fin, comme illustré à la figure 3 mais tout particulièrement à la figure 4, l'interface utilisateur 30 comprend un moyen de sélection 31 d'un type d'aliment parmi une pluralité de types d'aliments prédéfinis, et un bouton d'activation 32 d'une fonction de marquage des surfaces inférieure et supérieure de l'aliment disposé au contact de la plaque de cuisson inférieure 11 et de la plaque de cuisson supérieure 21.

L'appui sur ce bouton d'activation 32 d'une fonction de marquage permet d'appliquer uniquement des programmes de cuisson définis avec un paramètre d'activation de la fonction de marquage.

Les programmes de cuisson définis avec un paramètre d'activation de la fonction de marquage présentent une température de consigne de la phase de préchauffage PP supérieure à la température de consigne de la phase de préchauffage PP des programmes de cuisson n'appliquant pas la fonction de marquage, et cela pour un même type d'aliment.

L'interface utilisateur 30 comprend également un bouton d'activation 33 d'une fonction d'aliment congelé qui peut être actionnée par l'utilisateur lorsque l'aliment est introduit entre les plaques de cuisson 11, 21 alors qu'il se trouve dans un état de congélation.

L'appui sur ce bouton d'activation 33 d'une fonction d'aliment congelé permet ainsi d'appliquer uniquement des programmes de cuisson définis avec un paramètre d'activation de la fonction indiquant que l'aliment est congelé.

Chaque programme de cuisson est ainsi défini par une combinaison de différents paramètres.

Certains de ces paramètres se présentent sous la forme de variables d'entrée déclarées par l'utilisateur, notamment un type d'aliment à cuire parmi une liste de types d'aliments prédéfinis, l'activation ou non d'une fonction de marquage de l'aliment, et l'activation ou non d'une fonction signalant l'état congelé de l'aliment.

Pour sélectionner le type d'aliment à cuire, le moyen de sélection 31 du modèle d'appareil de cuisson électrique présenté aux figures 3 et 4 comporte un écran 34, notamment du type TFT, apte à afficher des icones 35 proposant un type d'aliment à l'utilisateur.

L'utilisateur en utilisant des boutons fléchés 36 a la possibilité de naviguer dans un carrousel pour lui permettre de faire défiler les diverses icones 35 représentant chacune un type d'aliment.

L'interface utilisateur 30 comprend également un bouton marche/arrêt 37 de l'appareil de cuisson électrique 1, un bouton de validation 38 d'une sélection d'un type d'aliment, et un bouton de passage en mode manuel 39 qui permet à l'utilisateur de faire abstraction des programmes de cuisson de la base de données tout en l'autorisant à sélectionner manuellement une température de consigne pour la phase de cuisson PC s'affichant sur l'écran 34 et étant ajustable à l'aide des boutons fléchés 36.

Enfin, l'interface utilisateur 30 comprend un moyen d'information 40 de l'état de cuisson interne de l'aliment au fur et à mesure de l'avancement de la phase de cuisson PC.

Ce moyen d'information 40 comprend un référentiel de couleurs disposé autour de l'écran 34 et dont chaque couleur est associée à un état de cuisson.

Une alerte sonore peut également être générée à chaque transition d'un état de cuisson vers un autre état de cuisson.

Une information du temps restant jusqu'à l'atteinte d'un état de cuisson ultérieur peut également être indiquée.

Ce moyen d'information peut être disposé sur l'appareil de cuisson électrique 1 ou sur un dispositif personnel de l'utilisateur, par exemple un smartphone, ou encore sur les deux.

Lors de la phase de cuisson de l'aliment, une flèche (non illustrée) est affichée sur le bord de l'écran 34 et se déplace au fur et à mesure de l'avancement du programme de cuisson de manière que cette flèche pointe sur l'état de cuisson dans lequel se trouve l'aliment au cours de la phase de cuisson, cette information ayant été déterminée au préalable lors de la définition du programme de cuisson à appliquer.

D'autres paramètres se présentent sous la forme de variables d'entrée déduites de mesures réalisées sur l'appareil de cuisson électrique 1.

Ces variables d'entrée peuvent être utilisées afin d'affiner la précision des paramètres de cuisson déterminés par les moyens de traitement.

Ces variables d'entrée sont par exemple l'épaisseur de l'aliment mesurée par un dispositif de mesure d'écartement (non illustré) entre les plaques de cuisson supérieure 21 et inférieure 11, et/ou la surface d'occupation de l'aliment sur la plaque de cuisson supérieure 21.

Le dispositif de mesure d'écartement des plaques de cuisson 11, 21 peut par exemple comprendre un potentiomètre relié à, ou compris, dans l'articulation 2 reliant la partie inférieure 10 à la partie supérieure 20 de l'appareil de cuisson électrique 1.

D'autres types de dispositifs de mesure d'écartement des plaques de cuisson 11, 21 peuvent également être utilisés, par exemple un capteur à effet Hall.

Les moyens de traitement peuvent utiliser une mesure directe de l'épaisseur E renvoyée par ce dispositif pour appliquer un programme de cuisson ou bien affecter cette mesure à différentes plages de valeurs prédéfinies stockées dans la base de données et pour lesquelles le fonctionnement de l'appareil de cuisson électrique 1 est sensiblement le même lorsque deux valeurs d'épaisseur E mesurée se situent dans une même plage de valeurs.

La surface d'occupation de l'aliment sur la plaque de cuisson supérieure 21 est quant à elle estimée par les moyens de traitements à partir de la durée de baisse de température déterminée par les mesures de températures réalisées par l'élément de mesure de température 23 de la plaque de cuisson supérieure 21 après la phase de préchauffage PP, notamment au début de la phase de cuisson PC lorsque l'aliment est mis au contact de la plaque de cuisson supérieure 21.

Comme illustré sur la figure 2, afin de déterminer la durée moyenne de baisse de température provoquée par un ou plusieurs aliments répartis sur la surface de la plaque de cuisson supérieure 21 alors l'élément de mesure de température 23 de la plaque de cuisson supérieure 21 est excentré et agencé pour réaliser une mesure sur un bord de la plaque de cuisson supérieure 21.

Ainsi, la surface d'occupation de l'aliment estimée à partir de la durée de baisse de température pouvant être déterminée du fait de la proximité d'un seul aliment avec l'élément de mesure de température 23 de la plaque de cuisson supérieure 21 est limitée. En effet, une telle durée de baisse de température ne serait pas représentative de la durée de baisse de température engendrée par l'ensemble des aliments disposés au contact de la plaque de cuisson supérieure 21.

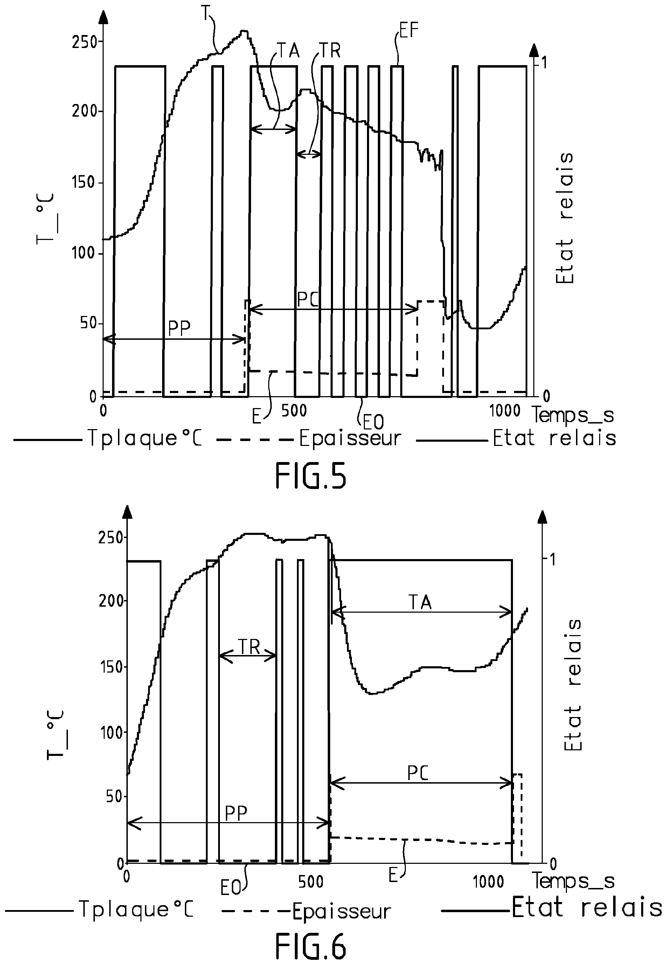

Les figures 5 et 6 sont des graphes représentatifs des paramètres de l'appareil de cuisson électrique 1 et des variables mesurées pour un menu boeuf sélectionné par l'utilisateur.

La figure 5 illustre un programme de cuisson défini sans paramètre d'activation de la fonction de marquage de l'aliment tandis que la figure 6 illustre un programme de cuisson défini avec l'activation de la fonction de marquage de l'aliment.

Sur ces deux figures sont illustrées les séquences de commutation de l'au moins un commutateur électrique, des mesures d'épaisseur E entre les plaques de cuisson 11, 21 permettant d'identifier la phase de préchauffage PP et la phase de cuisson PC d'un programme de cuisson, ainsi que l'évolution d'une température mesurée T au cours des différentes phases de préchauffage PP et de cuisson PC.

Les séquences de commutation de l'au moins un commutateur sont représentées par un signal carré en trait plein, l'évolution de la température T mesurée sur la figure 5 par l'élément de mesure de température 23 de la plaque de cuisson supérieure 21 et sur la figure 6 par l'élément de mesure de température 13 de la plaque de cuisson inférieure 11 est représentée par un trait continu présentant des sommets et des creux, et l'épaisseur E mesurée entre les deux plaques de cuisson 11, 21 est représentée par un trait en pointillés. Ainsi, lorsque la mesure de l'épaisseur E est approximativement nulle alors on peut en déduire que le programme de cuisson se trouve dans sa phase de préchauffage PP, et lorsque la mesure de l'épaisseur E n'est pas nulle alors on peut en déduire qu'un aliment a été introduit entre les plaques de cuisson 11, 21 et que le programme de cuisson se trouve dans sa phase de cuisson PC.

Comme illustré aux figures 5 et 6, l'exécution d'un programme de cuisson par les moyens de traitement consiste à réaliser des séquences de régulation en température sur une température de consigne prédéterminée pendant une durée prédéterminée, lesdites séquences de régulation étant réalisées par des séquences de commutations de l'au moins un commutateur électrique entre des états de commutation fermés EF pendant des temps d'activation TA prédéterminés et des états de commutation ouverts EO pendant des temps de repos TR prédéterminés.

Selon l'invention, les moyens de traitement de l'appareil de cuisson électrique 1 sont agencés de manière que lorsque l'utilisateur a défini un programme de cuisson avec l'activation de la fonction de marquage alors :
- l'élément de mesure de température 23 de la plaque de cuisson supérieure 21 est utilisé pour réguler la température d'au moins la plaque de cuisson supérieure 21 à la température de consigne de préchauffage pendant cette phase de préchauffage PP du programme de cuisson ainsi défini par l'utilisateur, et
- l'élément de mesure de température 13 de la plaque de cuisson inférieure 11 est utilisé pour réguler la température de la plaque de cuisson inférieure 11 et de la plaque de cuisson supérieure 21 à au moins une température de consigne de cuisson pendant la phase de cuisson PC du programme de cuisson ainsi défini par l'utilisateur.

Lorsque l'utilisateur a défini un programme de cuisson sans paramètre d'activation de la fonction de marquage sur l'interface utilisateur 30 alors :
- l'élément de mesure de température 13, 23 de la plaque de cuisson inférieure 11 ou supérieure 21 est utilisé pour réguler la température à l'au moins une température de consigne de préchauffage pendant la phase de préchauffage PP du programme de cuisson ainsi défini par l'utilisateur, et
- l'élément de mesure de température 23 de la plaque de cuisson supérieure 21 est également utilisé pour réguler la température à l'au moins une température de consigne de cuisson pendant la phase de cuisson PC du programme de cuisson ainsi défini par l'utilisateur.

Les figures 5 et 6 permettent de mettre en évidence les différences de fonctionnement de l'appareil de cuisson électrique 1 lorsque l'utilisateur n'a pas activé la fonction de marquage de l'aliment (figure 5) et lorsque l'utilisateur a activé la fonction de marquage de l'aliment (figure 6).

Il est à noter que la température des plaques de cuisson illustrée dans ces figures n'est pas représentative de l'effet induit par le marquage de l'aliment car celle-ci dépend entre autres de la position des aliments par rapport aux éléments de mesure 13, 23 de la température T et de la position de ces mêmes éléments de mesure 13, 23 sous la plaque de cuisson inférieure 11 ou sous la plaque de cuisson supérieure 21.

Selon l'invention, lorsque la fonction de marquage a été activée sur l'interface utilisateur 30 alors le nombre de séquences de régulation diminue pendant la phase de cuisson PC et l'au moins un commutateur électrique présente au moins un état de commutation fermé EF avec un temps d'activation TA supérieur aux temps d'activation TA de chacun des états de commutation fermés EF de l'au moins un commutateur électrique lorsque la fonction de marquage n'est pas activée.

Ainsi, on remarque que la phase de cuisson PC, sur la figure 5 présente une première séquence de régulation avec un temps d'activation TA et un temps de repos TR relativement long, puis une pluralité de séquences de régulation alternant des temps d'activation TA et de repos TR de l'au moins un commutateur.

La phase de cuisson PC, sur la figure 6 présente quant à elle une seule séquence de régulation avec un temps d'activation TA se prolongeant sur toute la durée de la phase de cuisson PC et sans temps de repos TR.

On remarque également que lorsque la mesure de température T est réalisée avec l'élément de mesure de température 13 de la plaque de cuisson inférieure 11 alors la durée de baisse de température due au contact de l'aliment avec la plaque de cuisson inférieure 11 est bien supérieure à la durée de baisse de température analogue mesurée avec l'élément de mesure de température 23 de la plaque de cuisson supérieure 21.

Cette différence de durée de baisse de température est en partie due au fait que l'élément de mesure de température 13 de la plaque de cuisson inférieure 11, qui est utilisé pour réaliser les régulations au cours de la phase de cuisson PC, est disposé de manière à réaliser une mesure sensiblement au centre de la plaque de cuisson inférieure 11.

Ainsi, les probabilités qu'un aliment soit disposé sur la plaque de cuisson inférieure 11 par-dessus l'élément de mesure de température 13 sont augmentées. Dans le cas où une telle configuration se produit, alors l'aliment absorbe davantage de calories à proximité de l'élément de mesure de température 13 et donc la température mesurée par l'élément de mesure de température 13 est plus basse que celle qui aurait été mesurée en l'absence d'un aliment à proximité de l'élément de mesure de température 13.

La température de consigne sera donc encore plus difficile à atteindre, lorsque la fonction de marquage aura été actionnée sur l'interface utilisateur 30, ce qui aura alors pour conséquences de diminuer encore le nombre de séquences de régulation pendant la phase de cuisson PC, voire de les supprimer si la durée de cuisson est inférieure au temps de montée en température à la température de consigne.

Lorsque la fonction de marquage est activée, les moyens de traitement reçoivent donc une mesure de température T inférieure à la mesure de température T réalisée lorsque la fonction de marquage n'est pas activée.

Il est également possible d'adapter les moyens de traitement pour que le nombre de séquences de régulation et le temps d'activation TA de l'au moins un commutateur électrique dépendent de l'épaisseur E mesurée par un dispositif de mesure de l'écartement entre la plaque de cuisson supérieure 21 et la plaque de cuisson inférieure 11.

Le temps d'activation TA illustré sur la figure 5 serait alors un temps d'activation TA minimal correspondant à une épaisseur E mesurée d'aliment minimale ou bien à une épaisseur E mesurée comprise dans une plage de valeurs minimales, et le temps d'activation TA illustré sur la figure 6 serait alors un temps d'activation TA maximal correspondant à une épaisseur E mesurée d'aliment maximale ou bien à une épaisseur E mesurée comprise dans une plage de valeurs maximales.

Dans le cas où l'appareil de cuisson électrique 1 comprendrait deux commutateurs électriques alors comme vu précédemment, il serait possible de contrôler de manière indépendante le chauffage de la plaque de cuisson inférieure 11 et le chauffage de la plaque de cuisson supérieure 21 pendant la phase de préchauffage PP, le chauffage de la plaque de cuisson inférieure 11 et le chauffage de la plaque de cuisson supérieure 21 étant contrôlés à partir des informations fournies par le seul élément de mesure de température 13 de la plaque de cuisson inférieure 11.

Ainsi, un utilisateur désireux d'utiliser un appareil de cuisson électrique 1 selon l'invention, commencera par raccorder l'appareil de cuisson électrique 1 à un réseau électrique.

La mise en marche de l'appareil de cuisson électrique 1 est ensuite réalisée en appuyant sur le bouton marche/arrêt 37.

Après la mise en marche, l'utilisateur sélectionne un type d'aliment parmi une liste prédéfinie de types d'aliments à l'aide de l'écran 34 et des boutons fléchés 36 de l'interface utilisateur 30.

Une fois sélectionné le type d'aliment à cuire, l'utilisateur valide son choix en appuyant sur le bouton de validation 38.

L'appareil de cuisson électrique démarre alors une phase de préchauffage PP des plaques de cuisson inférieure 11 et supérieure 21.

Les moyens de traitement régulent la température des plaques de cuisson 11, 21 à la température de préchauffage définie par un programme de cuisson sans paramètre d'activation de la fonction de fonction de marquage à partir de l'information de température délivrée par l'élément de mesure de température 13, 23 de la plaque de cuisson inférieure 11 ou supérieure 21.

Dans le cas où l'utilisateur désirerait marquer davantage ses aliments alors l'utilisateur appuie pendant la phase de préchauffage PP sur le bouton d'activation 32 d'une fonction de marquage des surfaces de l'aliment disposé au contact de la plaque de cuisson inférieure 11 et de la plaque de cuisson supérieure 21.

Les moyens de traitement régulent alors la température des plaques de cuisson 11, 21 à la température de préchauffage définie par un programme de cuisson défini avec un paramètre d'activation de la fonction de marquage à partir de l'information de température délivrée par l'élément de mesure de température 13, 23 de la plaque de cuisson inférieure 11 ou supérieure 21.

Cette température de régulation est supérieure à la température de régulation précédente d'un programme de cuisson défini sans paramètre d'activation de la fonction de marquage des aliments.

Une fois la température de préchauffage du programme de cuisson déterminé avec le paramètre d'activation de la fonction de marquage atteinte alors l'utilisateur amène l'appareil de cuisson électrique 1 jusqu'à sa position ouverte, puis place l'aliment sur la plaque de cuisson inférieure 11 et enfin amène l'appareil de cuisson électrique 1 vers sa position fermée dans laquelle l'aliment est enserré entre les deux plaques de cuisson 11, 21.

À partir de ce moment, l'appareil de cuisson électrique 1 démarre une phase de cuisson PC de l'aliment.

Au cours de cette phase de cuisson PC, les moyens de traitement régulent la température des plaques de cuisson 11, 21 à la température de cuisson définie par un programme de cuisson déterminé avec le paramètre d'activation de la fonction de marquage à partir de l'information de température délivrée par le seul élément de mesure de température 13 de la plaque de cuisson inférieure 11.

Au cours de cette phase de cuisson PC, l'élément de mesure de température 23 de la plaque de cuisson supérieure 21 est utilisé pour permettre aux moyens de traitement d'estimer la surface d'occupation de l'aliment sur la plaque de cuisson supérieure 23 à partir d'une durée au cours de laquelle il est constaté une baisse de température produite lors du contact de l'aliment avec la plaque de cuisson supérieure 21.

Une fois que l'aliment a atteint un état de cuisson désiré par l'utilisateur et visible sur le moyen d'information 40 alors l'utilisateur amène l'appareil de cuisson électrique 1 vers sa position ouverte et retire l'aliment.

Celui-ci présentera alors un état de cuisson désiré avec un marquage accentué de sa surface inférieure et supérieure.

Selon une variante, l'utilisateur a également la possibilité d'activer la fonction de marquage de manière concomitante avec la sélection du type d'aliment avant même le début de la phase de préchauffage PP d'un programme de cuisson.

Bien que l'invention ait été décrite en liaison avec des exemples particuliers de réalisation et d'applications, il est bien évident qu'elle n'y est nullement limitée.

Des modifications restent possibles, notamment du point de vue de l'agencement et de la constitution des différents éléments dans la mesure où elles sont comprises dans la portée des revendications.

C'est ainsi que l'ensemble de l'interface utilisateur 30 décrite précédemment pourrait être reproduite sur une application smartphone, l'appareil de cuisson électrique 1 comprenant des moyens de communication avec ledit smartphone.

C'est ainsi également que d'autres valeurs constantes prédéterminées que les différentes températures de cuisson interne de l'aliment correspondant chacune à un état de cuisson à coeur d'un aliment déterminé pourraient être utilisées.

En effet, l'état de cuisson à coeur est surtout utilisé pour les viandes.

Cependant, pour d'autres types d'aliment, notamment les légumes, il est possible de déterminer en laboratoire différentes variations de perte en masse de l'aliment correspondant chacune à un état de cuisson de l'aliment du type légume.

## Revendications

1. Appareil de cuisson électrique (1) comprenant :
- une alimentation électrique,
- une partie inférieure (10) comportant :
- une plaque de cuisson inférieure (11) apte à recevoir l'aliment,
- un élément chauffant électrique inférieur (12) apte à chauffer la plaque de cuisson inférieure (11),
- un élément de mesure de température (13) de la plaque de cuisson inférieure (11),
- une partie supérieure (20) comportant :
- une plaque de cuisson supérieure (21) apte à être déplacée relativement à la plaque de cuisson inférieure (11) de manière à venir au contact de l'aliment disposé sur la plaque de cuisson inférieure (11),
- un élément chauffant électrique supérieur (22) apte à chauffer la plaque de cuisson supérieure (21),
- un élément de mesure de température (23) de la plaque de cuisson supérieure (21),
- au moins un commutateur électrique apte à autoriser ou à interrompre l'alimentation électrique de l'élément chauffant électrique inférieur (12) et/ou de l'élément chauffant électrique supérieur (22),
- une base de données comprenant une loi de cuisson ou une table de calcul ainsi que des paramètres prédéterminés pour définir une pluralité de programmes de cuisson comprenant une phase de préchauffage (PP) avec une température de consigne, et une phase de cuisson (PC) avec au moins une température de consigne et au moins une durée de cuisson,
- une interface utilisateur (30) agencée pour permettre à l'utilisateur de sélectionner des paramètres de la base de données pour définir un programme de cuisson particulier parmi la pluralité de programmes de cuisson pouvant être appliqués, pour sélectionner ces paramètres ladite interface utilisateur (30) comprenant en outre un moyen de sélection (31) d'un type d'aliment parmi une pluralité de types d'aliment prédéfinis et un bouton d'activation (32) d'une fonction de marquage des surfaces de l'aliment disposé au contact de la plaque de cuisson inférieure (11) et de la plaque de cuisson supérieure (21), les programmes de cuisson définis avec un paramètre d'activation de la fonction de marquage ayant une température de consigne de la phase de préchauffage (PP) supérieure à la température consigne de la phase de cuisson (PC) des programmes de cuisson définis sans paramètre d'activation de la fonction de marquage pour un même type d'aliment,
- des moyens de traitement aptes à exécuter un programme de cuisson ainsi défini par un utilisateur, l'exécution d'un programme de cuisson consistant à réaliser des séquences de régulation en température sur une température de consigne prédéterminée pendant une durée prédéterminée, lesdites séquences de régulation étant réalisées par des séquences de commutations de l'au moins un commutateur électrique entre des états de commutation fermés (EF) pendant des temps d'activation (TA) et des états de commutation ouverts (EO) pendant des temps de repos (TR),
les moyens de traitement de l'appareil de cuisson électrique (1) étant agencés de manière que lorsque l'utilisateur a défini au moins un programme de cuisson déterminé avec le paramètre d'activation de la fonction de marquage alors :
- l'élément de mesure de température (23) de la plaque de cuisson supérieure (21) est utilisé pour réguler la température d'au moins la plaque de cuisson supérieure (21) à la température de consigne de préchauffage pendant cette phase de préchauffage (PP) du programme de cuisson ainsi défini par l'utilisateur, et
- l'élément de mesure de température (13) de la plaque de cuisson inférieure (11) est utilisé pour réguler la température de la plaque de cuisson inférieure (11) et de la plaque de cuisson supérieure (21) à au moins une température de consigne de cuisson pendant la phase de cuisson (PC) du programme de cuisson ainsi défini par l'utilisateur.

2. Appareil de cuisson électrique (1) selon la revendication 1, dans lequel l'élément de mesure (13) de température de la plaque de cuisson inférieure (11) est disposé pour réaliser une mesure sensiblement au centre de la plaque de cuisson inférieure (11).

3. Appareil de cuisson électrique (1) selon l'une des revendications 1 ou 2, dans lequel les moyens de traitement de l'appareil de cuisson électrique (1) sont agencés de manière que lorsque l'utilisateur a défini un programme de cuisson sans le paramètre d'activation de la fonction de marquage sur l'interface utilisateur (30) alors :
- l'élément de mesure de température (13, 23) de la plaque de cuisson inférieure (11) ou supérieure (21) est utilisé pour réguler la température à la température de consigne de préchauffage pendant la phase de préchauffage (PP) du programme de cuisson ainsi défini par l'utilisateur, et
- l'élément de mesure de température (23) de la plaque de cuisson supérieure (21) est également utilisé pour réguler la température à l'au moins une température de consigne de cuisson pendant la phase de cuisson (PC) du programme de cuisson ainsi défini par l'utilisateur.

4. Appareil de cuisson électrique (1) selon l'une des revendications 1 à 3, dans lequel les moyens de traitement sont adaptés pour que le nombre de séquences de régulation et le temps d'activation (TA) de l'au moins un commutateur électrique dépendent de l'épaisseur (E) mesurée par un dispositif de mesure de l'écartement entre la plaque de cuisson supérieure (21) et la plaque de cuisson inférieure (11).

5. Appareil de cuisson électrique (1) selon l'une des revendications 1 à 4, dans lequel l'élément de mesure de température (13) de la plaque de cuisson inférieure (11) et l'élément de mesure de température (23) de la plaque de cuisson supérieure (21) sont du type capteur à coefficient de température négative.

6. Appareil de cuisson électrique (1) selon la revendication 5, dans lequel l'élément de mesure de température (23) de la plaque de cuisson supérieure (21) est utilisé pour réguler la température à la température de consigne de préchauffage pendant cette phase de préchauffage (PP) du programme de cuisson ainsi défini par l'utilisateur, mais également pour estimer un paramètre lié à la surface d'occupation de l'aliment sur la plaque de cuisson supérieure (21), cette estimation étant réalisée à partir de la détermination d'une durée au cours de laquelle il est constaté une baisse de température produite lors du contact de l'aliment avec la plaque de cuisson supérieure (21).

7. Appareil de cuisson électrique (1) selon la revendication 6, dans lequel l'élément de mesure de température (23) de la plaque de cuisson supérieure (21) est excentré et agencé pour réaliser une mesure sur un bord de la plaque de cuisson supérieure (21).

8. Appareil de cuisson électrique (1) selon l'une des revendications 1 à 7, comprenant un commutateur électrique inférieur apte à autoriser ou à interrompre l'alimentation électrique de l'élément chauffant électrique inférieur (12) et un commutateur électrique supérieur apte à autoriser ou à interrompre l'alimentation électrique de l'élément chauffant électrique supérieur (22).

9. Appareil de cuisson électrique (1) selon la revendication 8, dans lequel au moins un programme de cuisson se définit avec :
- une température de consigne de la phase de préchauffage (PP), et au moins une température de consigne et au moins une durée de cuisson de la phase de cuisson (PC) appliquées à l'élément chauffant électrique inférieur (12), et
- une température de consigne de la phase de préchauffage (PP), et au moins une température de consigne et au moins une durée de cuisson de la phase de cuisson (PC) appliquées à l'élément chauffant électrique supérieur (22),
les moyens de traitement étant agencés pour piloter indépendamment le commutateur électrique inférieur et le commutateur électrique supérieur pendant la phase de préchauffage (PP) et/ou pendant la phase de cuisson (PC).

10. Appareil de cuisson électrique (1) selon la revendication 9, dans lequel pour un même programme de cuisson la température de consigne de la phase de préchauffage (PP) et l'au moins une température de consigne de la phase de cuisson (PC) appliquées à l'élément chauffant électrique inférieur (12) diffèrent respectivement de la température de consigne de la phase de préchauffage (PP) et de l'au moins une température de consigne de la phase de cuisson (PC) appliquées à l'élément chauffant électrique supérieur (22).

11. Appareil de cuisson électrique (1) selon l'une des revendications 1 à 10, dans lequel un programme de cuisson se définit avec tout ou partie des paramètres suivants :
- type d'aliment parmi une liste prédéfinie ;
- épaisseur (E) de l'aliment mesuré par un dispositif de mesure d'écartement des plaques de cuisson inférieure (11) et supérieure (21) ;
- surface d'occupation de l'aliment sur la plaque de cuisson supérieure (21) ;
- activation ou non d'une fonction de cuisson d'aliment congelé pendant la phase de préchauffage (PP) ;
- activation ou non d'une fonction de marquage de l'aliment pendant la phase de préchauffage (PP).

12. Appareil de cuisson électrique (1) selon l'une des revendications 1 à 11, dans lequel les moyens de traitement sont agencés pour déterminer des durées de cuisson au cours desquelles un type d'aliment prédéfini présente différents états de cuisson interne pour un programme de cuisson ainsi défini par l'utilisateur.

13. Appareil de cuisson électrique (1) selon la revendication 12, dans lequel l'interface utilisateur (30) comprend un moyen d'information (40) de l'état de cuisson interne de l'aliment au fur et à mesure de l'avancement de la phase de cuisson (PC) et/ou du temps restant jusqu'à une transition vers un état de cuisson ultérieur.

14. Procédé de marquage d'un aliment à partir d'un appareil de cuisson électrique (1) selon l'une des revendications 1 à 13, comprenant les étapes suivantes :
- sélectionner un type d'aliment sur l'interface utilisateur (30) parmi une liste prédéfinie de types d'aliments ;
- démarrer une phase de préchauffage (PP) des plaques de cuisson inférieure (11) ou supérieure (21) ;
- réguler la température des plaques de cuisson (11, 21) à la température de préchauffage d'un programme de cuisson défini sans paramètre d'activation de la fonction de marquage à partir de l'information de température délivrée par l'élément de mesure de température (13, 23) de la plaque de cuisson inférieure (11) ou supérieure (21) ;
- pendant la phase de préchauffage (PP), appuyer sur un bouton d'activation (32) d'une fonction de marquage des surfaces de l'aliment disposé au contact de la plaque de cuisson inférieure (11) et de la plaque de cuisson supérieure (21) ;
- réguler la température des plaques de cuisson (11, 21) à la température de préchauffage d'un programme de cuisson défini avec paramètre d'activation de la fonction de marquage à partir de l'information de température délivrée par l'élément de mesure de température (13, 23) de la plaque de cuisson inférieure (11) ou supérieure (23) ;
- une fois la température de préchauffage du programme de cuisson défini avec un paramètre d'activation de la fonction de marquage atteinte alors placer l'aliment entre les deux plaques de cuisson (11, 21) ;
- démarrer la phase de cuisson (PC) de l'aliment,
- réguler la température des plaques de cuisson (11, 21) à la température de cuisson du programme de cuisson défini avec un paramètre d'activation de la fonction de marquage à partir de l'information de température délivrée par l'élément de mesure de température (13) de la plaque de cuisson inférieure (11).

15. Procédé de marquage d'un aliment à partir d'un appareil de cuisson électrique (1) selon l'une des revendications 1 à 13, comprenant les étapes suivantes :
- sélectionner un type d'aliment sur l'interface utilisateur (30) parmi une liste prédéfinie de types d'aliments ;
- avant la phase de préchauffage (PP), appuyer sur un bouton d'activation (32) d'une fonction de marquage des surfaces de l'aliment disposé au contact de la plaque de cuisson inférieure (11) et de la plaque de cuisson supérieure (21) ;
- démarrer une phase de préchauffage (PP) des plaques de cuisson inférieure (11) ou supérieure (21) ;
- réguler la température des plaques de cuisson (11, 21) à la température de préchauffage d'un programme de cuisson défini avec un paramètre d'activation de la fonction de marquage à partir de l'information de température délivrée par l'élément de mesure de température (13, 23) de la plaque de cuisson inférieure (11) ou supérieure (23) ;
- une fois la température de préchauffage du programme de cuisson défini avec un paramètre d'activation de la fonction de marquage atteinte alors placer l'aliment entre les deux plaques de cuisson (11, 21) ;
- démarrer la phase de cuisson (PC) de l'aliment,
- réguler la température des plaques de cuisson (11, 21) à la température de cuisson du programme de cuisson défini avec un paramètre d'activation de la fonction de marquage à partir de l'information de température délivrée par l'élément de mesure de température (13) de la plaque de cuisson inférieure (11).

## Patentansprüche

1. Elektrische Kocheinrichtung (1), umfassend:
- eine Stromzufuhr,
- einen unteren Teil (10), umfassend:
- eine untere Kochplatte (11), die geeignet ist, das Lebensmittel aufzunehmen,
- ein unteres elektrisches Heizelement (12), das geeignet ist, die untere Kochplatte (11) zu erhitzen,
- ein Temperaturmesselement (13) der unteren Kochplatte (11),
- einen oberen Teil (20), umfassend:
- eine obere Kochplatte (21), die geeignet ist, im Verhältnis zur unteren Kochplatte (11) derart verschoben zu werden, dass sie mit dem auf der unteren Kochplatte (11) angeordneten Lebensmittel in Kontakt kommt,
- ein oberes elektrisches Heizelement (22), das geeignet ist, die obere Kochplatte (21) zu erhitzen,
- ein Temperaturmesselement (23) der oberen Kochplatte (21),
- mindestens einen elektrischen Schalter, der geeignet ist, die Stromzufuhr des unteren elektrischen Heizelements (12) und/oder des oberen elektrischen Heizelements (22) zu erlauben oder zu unterbrechen,
- eine Datenbank, die ein Kochgesetz oder eine Berechnungstabelle sowie vorbestimmte Parameter zum Definieren einer Vielzahl von Kochprogrammen umfasst, umfassend eine Vorwärmphase (PP) mit einer Solltemperatur, und eine Kochphase (PC) mit mindestens einer Solltemperatur und mindestens einer Kochdauer,
- eine Benutzerschnittstelle (30), die eingerichtet ist, um dem Benutzer zu ermöglichen, Parameter der Datenbank auszuwählen, um ein bestimmtes Kochprogramm aus der Vielzahl von Kochprogrammen, die angewendet werden können, zu definieren, wobei die Benutzerschnittstelle (30) zum Auswählen dieser Parameter weiter ein Auswahlmittel (31) einer Lebensmittelart aus einer Vielzahl von vordefinierten Lebensmittelarten und eine Aktivierungstaste (32) einer Markierungsfunktion der Oberflächen des im Kontakt mit der unteren Kochplatte (11) und der oberen Kochplatte (21) angeordneten Lebensmittels umfasst, wobei die mit einem Aktivierungsparameter der Markierungsfunktion definierten Kochprogramme eine Solltemperatur der Vorwärmphase (PP) aufweisen, die höher ist als die Solltemperatur der Kochphase (PC) der Kochprogramme, die für eine gleiche Lebensmittelart ohne Aktivierungsparameter der Markierungsfunktion definiert sind,
- Behandlungsmittel, die geeignet sind, ein von einem Benutzer so definiertes Kochprogramm auszuführen, wobei die Ausführung eines Kochprogramms darin besteht, Abfolgen von Temperaturregulierung auf einer vorbestimmten Solltemperatur während einer vorbestimmten Dauer durchzuführen, wobei die Regulierungsabfolgen durch Abfolgen von Umschaltungen des mindestens einen elektrischen Schalters zwischen geschlossenen Schalterzuständen (EF) während Aktivierungszeiten (TA) und offenen Schalterzuständen (EO) während Ruhezeiten (TR) durchgeführt werden,
wobei Behandlungsmittel der elektrischen Kocheinrichtung (1) derart eingerichtet sind, dass, wenn der Benutzer mindestens ein bestimmtes Kochprogramm mit dem Aktivierungsparameter der Markierungsfunktion definiert hat, dann:
- das Temperaturmesselement (23) der oberen Kochplatte (21) verwendet wird, um die Temperatur mindestens der oberen Kochplatte (21) während dieser Vorwärmphase (PP) des von dem Benutzer so definierten Kochprogramms an der Vorwärm-Solltemperatur zu regulieren, und
- das Temperaturmesselement (13) der unteren Kochplatte (11) verwendet wird, um die Temperatur der unteren Kochplatte (11) und der oberen Kochplatte (21) während der Kochphase (PC) des von dem Benutzer so definierten Kochprogramms an mindestens einer Kochsolltemperatur zu regulieren.

2. Elektrische Kocheinrichtung (1) nach Anspruch 1, wobei das Temperaturmesselement (13) der unteren Kochplatte (11) angeordnet ist, um eine Messung im Wesentlichen in der Mitte der unteren Kochplatte (11) durchzuführen.

3. Elektrische Kocheinrichtung (1) nach einem der Ansprüche 1 oder 2, wobei die Behandlungsmittel der elektrischen Kocheinrichtung (1) derart eingerichtet sind, dass, wenn der Benutzer ein Kochprogramm ohne den Aktivierungsparameter der Markierungsfunktion auf der Benutzerschnittstelle (30) definiert hat, dann:
- das Temperaturmesselement (13, 23) der unteren (11) oder oberen (21) Kochplatte verwendet wird, um die Temperatur während der Vorwärmphase (PP) des von dem Benutzer so definierten des Kochprogramms an der Vorwärm-Solltemperatur zu regulieren, und
- das Temperaturmesselement (23) der oberen Kochplatte (21) ebenfalls verwendet wird, um die Temperatur während der Kochphase (PC) des von dem Benutzer so definierten Kochprogramms an der mindestens einen Kochsolltemperatur zu regulieren.

4. Elektrische Kocheinrichtung (1) nach einem der Ansprüche 1 bis 3, wobei die Behandlungsmittel dazu angepasst sind, dass die Anzahl von Regulierungsabfolgen und die Aktivierungszeit (TA) des mindestens einen elektrischen Schalters von der Dicke (E) abhängen, die von einer Messvorrichtung des Abstands zwischen der oberen Kochplatte (21) und der unteren Kochplatte (11) gemessen wird.

5. Elektrische Kocheinrichtung (1) nach einem der Ansprüche 1 bis 4, wobei das Temperaturmesselement (13) der unteren Kochplatte (11) und das Temperaturmesselement (23) der oberen Kochplatte (21) vom Typ Sensor mit negativem Temperaturkoeffizienten sind.

6. Elektrische Kocheinrichtung (1) nach Anspruch 5, wobei das Temperaturmesselement (23) der oberen Kochplatte (21) verwendet wird, um die Temperatur während dieser Vorwärmphase (PP) des von dem Benutzer so definierten Kochprogramms an der Vorwärm-Solltemperatur zu regulieren, aber um ebenfalls einen Parameter zu schätzen, der mit der Auflageoberfläche des Lebensmittels auf der oberen Kochplatte (21) zusammenhängt, wobei diese Schätzung ausgehend von der Bestimmung einer Dauer durchgeführt wird, im Laufe derer eine beim Kontakt des Lebensmittels mit der oberen Kochplatte (21) erzeugte Temperaturabsenkung festgestellt wird.

7. Elektrische Kocheinrichtung (1) nach Anspruch 6, wobei das Temperaturmesselement (23) der oberen Kochplatte (21) exzentrisch ist und eingerichtet ist, um eine Messung an einem Rand der oberen Kochplatte (21) durchzuführen.

8. Elektrische Kocheinrichtung (1) nach einem der Ansprüche 1 bis 7, umfassend einen unteren elektrischen Schalter, der geeignet ist, die Stromzufuhr des unteren Heizelements (12) zu erlauben oder zu unterbrechen, und einen oberen elektrischen Schalter, der geeignet ist, die Stromzufuhr des oberen Heizelements (22) zu erlauben oder zu unterbrechen.

9. Elektrische Kocheinrichtung (1) nach Anspruch 8, wobei mindestens ein Kochprogramm definiert ist mit:
- einer Solltemperatur der Vorwärmphase (PP), und mindestens einer Solltemperatur und mindestens einer Kochdauer der Kochphase (PC), die am unteren elektrischen Heizelement (12) angewendet werden, und
- einer Solltemperatur der Vorwärmphase (PP), und mindestens einer Solltemperatur und mindestens einer Kochdauer der Kochphase (PC), die am oberen elektrischen Heizelement (22) angewendet werden, wobei die Behandlungsmittel eingerichtet sind, um den unteren elektrischen Schalter und den oberen elektrischen Schalter während der Vorwärmphase (PP) und/oder während der Kochphase (PC) unabhängig zu steuern.

10. Elektrische Kocheinrichtung (1) nach Anspruch 9, wobei für ein gleiches Kochprogramm die Solltemperatur der Vorwärmphase (PP) und die mindestens eine Solltemperatur der Kochphase (PC), die am unteren elektrischen Heizelement (12) angewendet werden, sich jeweils von der Solltemperatur der Vorwärmphase (PP) und der mindestens einen Solltemperatur der Kochphase (PC), die am oberen elektrischen Heizelement (22) angewendet werden, unterscheiden.

11. Elektrische Kocheinrichtung (1) nach einem der Ansprüche 1 bis 10, wobei ein Kochprogramm mit den gesamten oder einem Teil der folgenden Parameter definiert ist:
- Lebensmittelart aus einer vordefinierten Liste;
- Dicke (E) des Lebensmittels, die von einer Messvorrichtung des Abstands der unteren (11) und oberen (21) Kochplatte gemessen wird;
- Auflageoberfläche des Lebensmittels auf der oberen Kochplatte (21);
- Aktivierung oder Nichtaktivierung einer Kochfunktion eines gefrorenen Lebensmittels während der Vorwärmphase (PP);
- Aktivierung oder Nichtaktivierung einer Markierungsfunktion des Lebensmittels während der Vorwärmphase (PP).

12. Elektrische Kocheinrichtung (1) nach einem der Ansprüche 1 bis 11, wobei die Behandlungsmittel eingerichtet sind, um Kochdauern zu bestimmen, im Laufe derer eine vorbestimmte Lebensmittelart für ein von dem Benutzer so definiertes Kochprogramm unterschiedliche innere Kochzustände aufweist.

13. Elektrische Kocheinrichtung (1) nach Anspruch 12, wobei die Benutzerschnittstelle (30) ein Informationsmittel (40) bezüglich des inneren Kochzustands des Lebensmittels im Verlauf des Fortschreitens der Kochphase (PC) und/oder der verbleibenden Zeit bis zu einem Übergang zu einem späteren Kochzustand umfasst.

14. Verfahren zur Markierung eines Lebensmittels ausgehend von einer elektrischen Kocheinrichtung (1) nach einem der Ansprüche 1 bis 13, das die folgenden Schritte umfasst:
- Auswählen einer Lebensmittelart auf der Benutzerschnittstelle (30) aus einer vordefinierten Liste von Lebensmittelarten;
- Einleiten einer Vorwärmphase (PP) der unteren (11) oder oberen (21) Kochplatte;
- Regulieren der Temperatur der Kochplatten (11, 21) an der Vorwärmtemperatur eines ohne Aktivierungsparameter der Markierungsfunktion definierten Kochprogramms ausgehend von der von dem Temperaturmesselement (13, 23) der unteren (11) oder oberen (21) Kochplatte bereitgestellten Temperaturinformation;
- während der Vorwärmphase (PP), Drücken auf eine Aktivierungstaste (32) einer Markierungsfunktion der Oberflächen des im Kontakt mit der unteren Kochplatte (11) und der oberen Kochplatte (21) angeordneten Lebensmittels;
- Regulieren der Temperatur der Kochplatten (11, 21) an der Vorwärmtemperatur eines mit Aktivierungsparameter der Markierungsfunktion definierten Kochprogramms ausgehend von der von dem Temperaturmesselement (13, 23) der unteren (11) oder oberen (23) Kochplatte bereitgestellten Temperaturinformation;
- sobald die Vorwärmtemperatur des mit einem Aktivierungsparameter der Markierungsfunktion definierten Kochprogramms erreicht ist, dann Platzieren des Lebensmittels zwischen den zwei Kochplatten (11, 21);
- Einleiten der Kochphase (PC) des Lebensmittels,
- Regulieren der Temperatur der Kochplatten (11, 21) an der Kochtemperatur des mit einem Aktivierungsparameter der Markierungsfunktion definierten Kochprogramms ausgehend von der von dem Temperaturmesselement (13) der unteren Kochplatte (11) bereitgestellten Temperaturinformation.

15. Verfahren zur Markierung eines Lebensmittels ausgehend von einer elektrischen Kocheinrichtung (1) nach einem der Ansprüche 1 bis 13, das die folgenden Schritte umfasst:
- Auswählen einer Lebensmittelart auf der Benutzerschnittstelle (30) aus einer vordefinierten Liste von Lebensmittelarten;
- vor der Vorwärmphase (PP), Drücken auf eine Aktivierungstaste (32) einer Markierungsfunktion der Oberflächen des im Kontakt mit der unteren Kochplatte (11) und der oberen Kochplatte (21) angeordneten Lebensmittels;
- Einleiten einer Vorwärmphase (PP) der unteren (11) oder oberen (21) Kochplatte;
- Regulieren der Temperatur der Kochplatten (11, 21) an der Vorwärmtemperatur eines mit einem Aktivierungsparameter der Markierungsfunktion definierten Kochprogramms ausgehend von der von dem Temperaturmesselement (13, 23) der unteren (11) oder oberen (23) Kochplatte bereitgestellten Temperaturinformation;
- sobald die Vorwärmtemperatur des mit einem Aktivierungsparameter der Markierungsfunktion definierten Kochprogramms erreicht ist, dann Platzieren des Lebensmittels zwischen den zwei Kochplatten (11, 21);
- Einleiten der Kochphase (PC) des Lebensmittels,
- Regulieren der Temperatur der Kochplatten (11, 21) an der Kochtemperatur des mit einem Aktivierungsparameter der Markierungsfunktion definierten Kochprogramms ausgehend von der von dem Temperaturmesselement (13) der unteren Kochplatte (11) bereitgestellten Temperaturinformation.

## Claims

1. Electric cooking appliance (1) comprising:
- a power supply,
- a lower part (10) comprising:
- a lower cooking plate (11) capable of receiving the food,
- a lower electrical heating element (12) capable of heating the lower cooking plate (11),
- an element (13) for measuring the temperature of the lower cooking plate (11),
- an upper part (20) comprising:
- an upper cooking plate (21) capable of being moved relative to the lower cooking plate (11) so as to come into contact with the food disposed on the lower cooking plate (11),
- an upper electrical heating element (22) capable of heating the upper cooking plate (21),
- an element (23) for measuring the temperature of the upper cooking plate (21),
- at least one electrical switch capable of enabling or of interrupting the power supply of the lower electrical heating element (12) and/or of the upper electrical heating element (22),
- a database comprising a cooking law or a calculation table, as well as the predetermined parameters to define a plurality of cooking programs comprising a preheating phase (PP) with a setpoint temperature, and a cooking phase (PC) with at least one setpoint temperature and at least one cooking duration,
- a user interface (30) arranged to enable the user to select parameters of the database to define a particular cooking program from among the plurality of cooking programs which could be applied, to select these parameters, said user interface (30) further comprising a means for selecting (31) a food type from among a plurality of predefined food types and an activation button (32) of a function for marking the surfaces of the food disposed in contact with the lower cooking plate (11) and with the upper cooking plate (21), the cooking programs defined with an activation parameter of the marking function having a setpoint temperature of the preheating phase (PP) greater than the setpoint temperature of the cooking phase (PC) of the cooking programs defined without activation parameter of the marking function for one same type of food,
- processing means, capable of executing a cooking program thus defined by a user, the execution of a cooking program consisting of performing temperature regulation sequences on a predetermined setpoint temperature for a predetermined duration, said regulation sequences being carried out by switching sequences of the at least one electrical switch between closed switching states (EF) during activation times (TA) and open switching states (EO) during rest times (TR),
means for processing the electric cooking appliance (1) being arranged such that when the user has defined at least one cooking program determined with the activation parameter of the marking function, thus:
- the element (23) for measuring the temperature of the upper cooking plate (21) is used to regulate the temperature of at least the upper cooking plate (21) to the preheating setpoint temperature during this preheating phase (PP) of the cooking program thus defined by the user, and
- the element (13) for measuring the temperature of the lower cooking plate (11) is used to regulate the temperature of the lower cooking plate (11) and of the upper cooking plate (21) to at least one cooking setpoint temperature during the cooking phase (PC) of the cooking program thus defined by the user.

2. Electric cooking appliance (1) according to claim 1, wherein the element (13) for measuring the temperature of the lower cooking plate (11) is disposed to take a measurement substantially at the centre of the lower cooking plate (11).

3. Electric cooking appliance (1) according to one of claims 1 or 2, wherein the means for processing the electric cooking appliance (1) are arranged such that when the user has defined a cooking program without the activation parameter of the marking function on the user interface (30), thus:
- the element (13, 23) for measuring the temperature of the lower (11) or upper (21) cooking plate is used to regulate the temperature to the preheating setpoint temperature during the preheating phase (PP) of the cooking program thus defined by the user, and
- the element (23) for measuring the temperature of the upper cooking plate (21) is also used to regulate the temperature at the at least one cooking setpoint temperature during the cooking phase (PC) of the cooking program thus defined by the user.

4. Electric cooking appliance (1) according to one of claims 1 to 3, wherein the processing means are adapted such that the number of regulation sequences and the activation time (TA) of the at least one electrical switch depend on the thickness (E) measured by a device for measuring the distance between the upper cooking plate (21) and the lower cooking plate (11).

5. Electric cooking appliance (1) according to one of claims 1 to 4, wherein the element (13) for measuring the temperature of the lower cooking plate (11) and the element (23) for measuring the temperature of the upper cooking plate (21) are of the negative temperature coefficient sensor type.

6. Electric cooking appliance (1) according to claim 5, wherein the element (23) for measuring the temperature of the upper cooking plate (21) is used to regulate the temperature at the preheating setpoint temperature during this preheating phase (PP) of the cooking program thus defined by the user, but also to estimate a parameter linked to the occupation surface of the food on the upper cooking plate (21), this estimation being made from determining a duration during which a drop in temperature is observed, produced during the contact of the food with the upper cooking plate (21).

7. Electric cooking appliance (1) according to claim 6, wherein the element (23) for measuring the temperature of the upper cooking plate (21) is offset and arranged to take a measurement on an edge of the upper cooking plate (21).

8. Electric cooking appliance (1) according to one of claims 1 to 7, comprising a lower electrical switch capable of enabling or interrupting the power supply of the lower electrical heating element (12) and an upper electrical switch capable of enabling or interrupting the power supply of the upper electrical heating element (22).

9. Electric cooking appliance (1) according to claim 8, wherein at least one cooking program is defined with:
- a setpoint temperature of the preheating phase (PP), and at least one setpoint temperature and at least one cooking duration of the cooking phase (PC) applied to the lower electrical heating element (12), and
- a setpoint temperature of the preheating phase (PP), and at least one setpoint temperature and at least one cooking duration of the cooking phase (PC) applied to the upper electrical heating element (22), the processing means being arranged to independently control the lower electrical switch and the upper electrical switch during the preheating phase (PP) and/or during the cooking phase (PC).

10. Electric cooking appliance (1) according to claim 9, wherein for one same cooking program, the setpoint temperature of the preheating phase (PP) and the at least one setpoint temperature of the cooking phase (PC) applied to the lower electrical heating element (12) respectively different from the setpoint temperature of the preheating phase (PP) and of the at least one setpoint temperature of the cooking phase (PC) applied to the upper electrical heating element (22).

11. Electric cooking appliance (1) according to one of claims 1 to 10, wherein a cooking program is defined with all or some of the following parameters:
- type of food from among a predefined list;
- thickness (E) of the food measured by a device for measuring the distance of the lower (11) and upper (21) cooking plates;
- occupation surface of the food on the upper cooking plate (21);
- activation or not of a frozen food cooking function during the preheating phase (PP);
- activation or not of a function of marking the food during the preheating phase (PP).

12. Electric cooking appliance (1) according to one of claims 1 to 11, wherein the processing means are arranged to determine the cooking durations during which a predefined type of food has different internal cooking states for a cooking program thus defined by the user.

13. Electric cooking appliance (1) according to claim 12, wherein the user interface (30) comprises an information means (40) of the internal cooking state of the food progressively from the progression of the cooking phase (PC) and/or the remaining time until a transition to a subsequent cooking state.

14. Method for marking a food from which an electric cooking appliance (1) according to one of claims 1 to 13, comprising the following steps:
- selecting a type of food on the user interface (30) from among a predefined list of types of food;
- starting a phase for preheating (PP) the lower (11) or upper (21) cooking plates;
- regulating the temperature of the cooking plates (11, 21) to the preheating temperature of a cooking program defined without activation parameter of the marking function from the temperature information delivered by the element (13, 23) for measuring the temperature of the lower (11) or upper (21) cooking plate;
- during the preheating phase (PP), pressing an activation button (32) of a function for marking surfaces of the food disposed in contact with the lower cooking plate (11) and the upper cooking plate (21);
- regulating the temperature of the cooking plates (11, 21) to the preheating temperature of a cooking program defined with activation parameter of the marking function from the temperature information delivered by the elements (13, 23) for measuring the temperature of the lower (11) or upper (23) cooking plate;
- once the preheating temperature of the cooking program defined with an activation parameter of the marking function is reached, then the food is placed between the two cooking plates (11, 21);
- starting the phase for cooking (PC) the food,
- regulating the temperature of the cooking plates (11, 21) to the cooking temperature of the cooking program defined with an activation parameter of the marking function from the temperature information delivered by the element (13) for measuring the temperature of the lower cooking plate (11).

15. Method for marking a food from which an electric cooking appliance (1) according to one of claims 1 to 13, comprising the following steps:
- selecting a type of food on the user interface (30) from among a predefined list of types of food;
- before the preheating phase (PP), pressing an activation button (32) of a function for marking surfaces of the food disposed in contact with the lower cooking plate (11) and the upper cooking plate (21);
- starting a phase for preheating (PP) the lower (11) or upper (21) cooking plates;
- regulating the temperature of the cooking plates (11, 21) to the preheating temperature of a cooking program defined with an activation parameter of the marking function from the temperature information delivered by the elements (13, 23) for measuring the temperature of the lower (11) or upper (23) cooking plate;
- once the preheating temperature of the cooking program defined with an activation parameter of the marking function is reached, then the food is placed between the two cooking plates (11, 21);
- starting the phase for cooking (PC) the food,
- regulating the temperature of the cooking plates (11, 21) to the cooking temperature of the cooking program defined with an activation parameter of the marking function from the temperature information delivered by the element (13) for measuring the temperature of the lower cooking plate (11).
